# EUROPEAN PATENT APPLICATION

(11) **EP 4 675 781 A1**
(43) Date of publication of application: **07.01.2026**
(21) Application number: 24763901.6
(22) Date of filing: 27.02.2024
(51) Int. Cl.: H01M 50/152, H01M 50/107, H01M 50/159, H01M 50/167, H01M 50/184, H01M 50/186, H01M 50/193

(54) **POWER STORAGE DEVICE**

(30) Priority: 28.02.2023 JP 2023030371
(71) Applicant: Panasonic Intellectual Property Management Co., Ltd., Kadoma-shi, Osaka 571-0057 (JP)
(72) Inventor: KOZUKI, Kiyomi, Kadoma-shi, Osaka 571-0057 (JP); KATO, Yudai, Kadoma-shi, Osaka 571-0057 (JP); NOGAMI, Takahiro, Kadoma-shi, Osaka 571-0057 (JP); GESHI, Shinya, Kadoma-shi, Osaka 571-0057 (JP)
(74) Representative: Eisenführ Speiser
(86) International application number: PCT/JP2024/007015
(87) International publication number: WO 2024/181422

(57) **Abstract**

This power storage device comprises: an electrode body (10); an outer can (20) housing the electrode body (10) and having a cylinder portion (21) with an opening portion at one end side thereof; and a sealing member (24) closing the opening. A bent portion (210) that is folded inward is formed at the peripheral portion of the opening of the outer can (20). The sealing member (24) includes a plate-like sealing body provided so as to close the opening, and a gasket (33) interposed between the upper surface of the sealing body and the bent portion. A recessed portion (25a) is formed in a part of the sealing body. A protruding portion (33d) is formed in a part of the gasket (33). The protruding portion of the gasket fits in the recessed portion (25a) of the sealing body.

## Description

### TECHNICAL FIELD

The present disclosure relates to a power storage device such as secondary batteries.

### BACKGROUND ART

In power storage devices such as lithium ion batteries, those including a bottomed cylindrical outer can that houses an electrode assembly responsible for power generation and a sealing member that seals an opening portion of the outer can are widely used.

In such a power storage device, it is necessary to prevent moisture from entering inside the outer can, and high airtightness is required. Therefore, a circumferential edge portion of the sealing member is caulked and fixed to an upper portion of the outer can so as to seal a contact portion between the outer can and the sealing member.

Specifically, an annular groove portion that is recessed inward is formed around the outer can in an area close to an upper end of the outer can. Then, the circumferential edge portion of the sealing member is laid on the upper side of the groove portion, and in this state, the upper end portion of the outer can is caulked so as to be bent inward, so that the circumferential edge portion of the sealing member is held and fixed between the groove portion and the bent portion.

According to Patent Literature 1, the sealability of a caulked portion is improved by bending the far end of the folded portion up to the side of the sealing member.

### CITATION LIST

### PATENT LITERATURE

PATENT LITERATURE 1: Japanese Unexamined Patent Application Publication No. 2000-173565

### SUMMARY

The folded portion enhances the reliability of the power storage device. However, with the increase in capacity and output of the power storage devices, it is necessary to further enhance the reliability of the power storage devices. Therefore, an object of the present disclosure is to provide a highly reliable power storage device.

A power storage device according to the present disclosure includes: an electrode assembly; an outer can that houses the electrode assembly, the outer can having a cylinder part and an opening portion on one end side of the cylinder part; and a sealing member that closes the opening, wherein a bent portion that is folded inward is formed at a circumferential edge portion of the opening of the outer can, the sealing member has a plate-shaped sealing assembly provided to close the opening and a gasket interposed between an upper surface of the sealing assembly and the bent portion, a recessed portion is formed in part of the sealing assembly, a projection is formed in part of the gasket, and the projection of the gasket fits into the recessed portion of the sealing assembly.

In the power storage device according to the present disclosure, the reliability is enhanced.

### BRIEF DESCRIPTION OF DRAWING

FIG. 1 is a sectional view of a battery 1 as an example of a power storage device of an embodiment.
FIG. 2 is a view illustrating a winding state of an electrode assembly 10.
FIG. 3 is a longitudinal sectional view of an example of a bent portion 210 formed by bending an upper end of the outer can 20 inward.
FIG. 4 is a partially enlarged view showing the configuration of a sealing member of the power storage device according to the present embodiment, in which (a) shows before bending and (b) shows after bending.
FIG. 5 is a partially enlarged view showing the configuration of the sealing member of the power storage device according to another embodiment, in which (a) shows before bending and (b) shows after bending.
FIG. 6 is a partially enlarged view showing the configuration of the sealing member of the power storage device according to still another embodiment, in which (a) shows before bending and (b) shows after bending.

### DESCRIPTION OF EMBODIMENTS

Hereinafter, examples of the embodiments of the power storage device according to the present disclosure will be described in detail with reference to the drawings. Here, the configurations achieved by selectively combining a plurality of embodiments and modifications described below are incorporated in the present disclosure.

### [Overall Configuration]

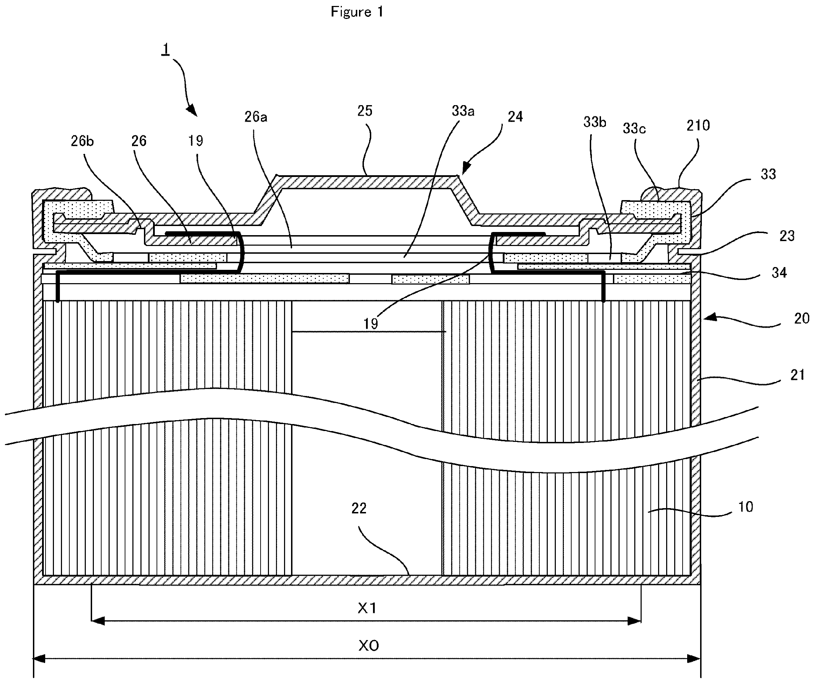

FIG. 1 is a sectional view of a battery 1 as an example of the power storage device of the embodiment. Note that capacitors and other devices are also included in the power storage device.

As shown in FIG. 1, the battery 1 includes an electrode assembly 10, and an outer can 20 that houses the electrode assembly 10. The outer can 20 includes a cylinder part 21 and a bottom portion 22 that seals one end of the cylinder part 21. At the other end of the cylinder part 21, an opening portion is formed, and the opening portion is sealed by a sealing member 24. The outer can 20 also houses electrolyte solution together with the electrode assembly 10. The electrolyte solution may be aqueous electrolyte solution, though in the present embodiment, non-aqueous electrolyte solution is used. Instead of the electrolyte solution, solid electrolyte may also be used. As the solid electrolyte, there may be used, for example, solid or gel-like polymer electrolyte, inorganic solid electrolyte, or the like.

At the opening portion side of the cylinder part 21 in the height direction, an annular groove portion 23 that protrudes to a radial inside of the battery (or the outer can) is provided. The sealing member 24 supported by the groove portion 23 seals the opening portion of the outer can 20. Hereinafter, for the convenience of description, the side of the sealing member 24 of the battery 1 is defined as an upper side, and the side of the bottom portion 22 of the outer can 20 is defined as a lower side. Note that the outer can used for the power storage device in the present disclosure may have an opening at both ends in the height direction, and the pair of openings may each be sealed with a sealing member.

In addition, the battery 1 has a plurality of electrode leads that extend from each part of the electrode assembly 10 toward the side of the sealing member 24 to directly connect a first electrode constituting the electrode assembly 10 and a current collector plate 26 of the sealing member 24. Between the electrode assembly 10 and the sealing member 24, an upper insulating plate 34 is arranged, for example.

The electrode assembly 10 is a winding type electrode assembly having a first electrode and a second electrode wound through separators. In the present embodiment, the first electrode is a positive electrode, the second electrode is a negative electrode, and the electrode leads are positive electrode leads 19. As will be described later, a plurality of the positive electrode leads 19 are arranged at predetermined intervals in the longitudinal direction of the positive electrode and extend upward from the upper portion of the positive electrode.

The positive electrode leads 19 electrically connect the positive electrode and a metal component of the sealing member 24. The negative electrode is electrically connected to the outer can 20 when, for example, a protruding portion of a core material comes into contact with the outer can 20 through a negative electrode collector plate. Accordingly, the sealing member 24 functions as a positive electrode terminal, and the outer can 20 functions as a negative electrode terminal. The upper insulating plate 34 prevents the positive electrode and the positive electrode leads 19 from touching the outer can 20 and also prevents the positive electrode leads 19 from touching the negative electrode of the electrode assembly 10. Note that the negative electrode may also be electrically connected through a lead to the bottom portion of the outer can.

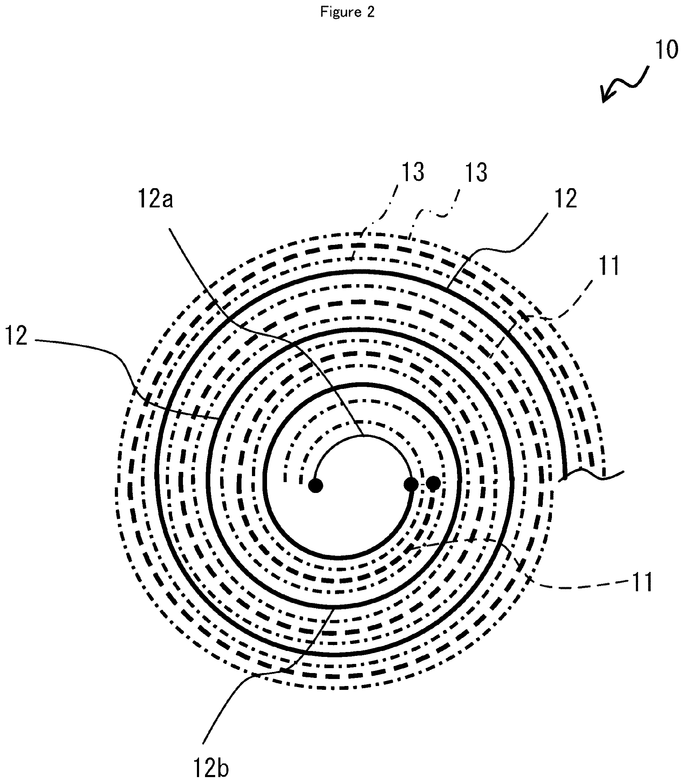

FIG. 2 is a view illustrating the winding state of the electrode assembly 10. The electrode assembly 10 includes a positive electrode 11, a negative electrode 12, and separators 13 interposed between the positive electrode 11 and the negative electrode 12, which are all band-shaped long members and are wound in a spiral shape so as to be stacked alternately in a radial direction of the electrode assembly 10. The positive electrode 11 and negative electrode 12 each have a mixture layer on its surface. In order to prevent lithium deposition, the mixture layer of the negative electrode 12 is normally formed with dimensions slightly larger than the mixture layer of the positive electrode 11. Specifically, the mixture layer of the negative electrode 12 is formed to be longer in a longitudinal direction and a width direction (short direction) than the mixture layer of the positive electrode 11. In the example in FIG. 2, a start end on the inside of the positive electrode 11 is located outside a start end of the negative electrode 12. In a center portion of the electrode assembly 10, only the negative electrode 12 and the separators 13 are wound. The separators 13 are also formed with dimensions at least slightly larger than the positive electrode 11, and the two separators 13 are arranged to hold the positive electrode 11 therebetween. This allows the separators 13 to be interposed between the positive electrode 11 and the negative electrode 12 when they are wound.

The positive electrode 11 has a band-shaped positive electrode core and a positive electrode mixture layer that is formed on at least one surface of the core. As the positive electrode core, there may be used a foil made of metal that is stable in a potential range of the positive electrode, such as aluminum and aluminum alloy, a film with the metal arranged on its surface layer, or the like. The positive electrode mixture layer preferably contains a positive electrode active material, a conductive agent such as acetylene black, and a binding agent such as polyfluoride vinylidene (PVdF), and is formed on both the surfaces of the positive electrode core. As the positive electrode active material, lithium-transition metal mixture oxide is used, for example. The positive electrode leads 19, which are connected to the positive electrode, are preferably joined to the positive electrode core directly by welding or the like.

The negative electrode 12 has a band-shaped negative electrode core and a negative electrode mixture layer that is formed on at least one surface of the core. As the negative electrode core, there may be used a foil made of metal that is stable in a potential range of the negative electrode, such as copper and copper alloy, a film with the metal arranged on its surface layer, or the like. The negative electrode mixture layer preferably contains a negative electrode active material and a binding agent such as styrene-butadiene rubber (SBR), and is formed on both the surfaces of the negative electrode core. As the negative electrode active material, graphite, silicon-containing compounds, and the like are used, for example. Here, a tongue-shaped negative electrode lead may be joined directly to the negative electrode core by welding or the like and be joined to a current collector plate.

The non-aqueous electrolyte housed in the outer can 20 contains non-aqueous solvent and electrolyte salt dissolved in the non-aqueous solvent. As the non-aqueous solvent, there may be used, for example, esters, ethers, nitriles, amides, and mixed solvent of two or more of the group consisting of these. The non-aqueous solvents may contain halogen substitution products in which at least some of hydrogen in these solvents is substituted with halogen atoms such as fluorine. Examples of the non-aqueous solvents may include ethylene carbonate (EC), ethyl methyl carbonate (EMC), dimethyl carbonate (DMC), and mixed solvent of these. As the electrolyte salt, lithium salt such as LiPF6 is used, for example.

Back to FIG. 1, the outer can 20, which is a bottomed cylindrical metal container with its axial upper end being opened, has the cylinder part 21 formed in a cylindrical shape and the bottom portion 22 having a circular shape as viewed from the bottom surface. While the outer can 20 is generally made of metal with iron as a main component, the outer can 20 may be made of metal with aluminum or the like as a main component when the outer can 20 is electrically connected to the cathode in particular. The outer can 20 also has the groove portion 23 formed along a circumferential direction of the cylinder part 21. The groove portion 23 is formed in the vicinity of the opening portion of the outer can 20 and at a position prescribed length distanced downward from an edge portion of the opening portion (the upper end of the outer can 20). The prescribed length is, for example, a length corresponding to greater than or equal to 1% and less than or equal to 20% of the axial length of the outer can 20.

In the present embodiment, a safety valve mechanism that operates at occurrence of abnormality in the battery 1 is provided at the bottom portion 22 of the outer can 20. In the bottom portion 22, a thin-walled portion is formed, for example. When the internal pressure rises due to an abnormality in the battery 1, the thin-walled portion breaks preferentially, and a gas outlet is formed in the bottom portion 22.

The groove portion 23, which is a part of the cylinder part 21 that protrudes toward the inside of the outer can 20, is formed by spinning the cylinder part 21 from the outside, for example. Moreover, at a formation position of the groove portion 23, the diameter of the outer can 20 is reduced, and a thin line-shaped groove is formed on the outer circumferential surface of the cylinder part 21. The groove portion 23 preferably has a substantially U-shape in cross section and is annularly formed over the entire circumferential length of the cylinder part 21. The groove portion 23 may be formed by processing the cylinder part 21 after the electrode assembly 10 is housed in the outer can 20.

The inner diameter of the outer can 20 at the formation position of the groove portion 23 is, for example, greater than or equal to 80% and less than or equal to 99% of a maximum inner diameter of the outer can 20. For example, the length of the groove portion 23 along the radial direction of the outer can 20 is 0.5 mm to 2.0 mm. Since the diameter of the electrode assembly 10 is about the same as the maximum inner diameter of the outer can 20, the electrode assembly 10 and the groove portion 23 overlap in an up-down direction of the battery 1. In the present embodiment, the lower ends of the positive electrode leads 19 are connected to the upper end of the positive electrode at a plurality of points, and the other end is connected to a cap 25 through the current collector plate 26.

The sealing member 24 includes, for example, the cap 25, the current collector plate 26, and an electrically insulating gasket 33, and is formed as a whole in a disk shape. The sealing member 24 is arranged on the groove portion 23 of the outer can 20 and is fixed to the opening portion of the outer can 20. The upper end of the opening portion is bent inward and is caulked to the sealing member 24 through the gasket 33 to form a bent portion. In other words, the sealing member 24 is fixed to the upper end portion of the outer can 20 by the groove portion 23 and the bent portion of the outer can 20, and seals the opening portion of the outer can 20. The bent portion is annularly formed along the circumference direction of the outer can 20, and holds the sealing member 24 together with the groove portion 23. Note that the sealing member 24 includes the upper insulating plate 34 or other parts to cover the upper opening portion of the outer can 20. The sealing member 24 may also include a metal rupture plate or the like.

The cap 25 is a disk-shaped metal member that is exposed to the outside of the outer can 20 to form a top surface of the battery 1. The cap 25 has a shape (raised portion) of a radial center portion protruding to the outside of the battery 1. The cap 25 is connected to wiring materials when the battery 1 is modularized to form a battery pack. Accordingly, the cap 25 functions as an external terminal of the battery 1 and is also called an external terminal or a top cover. In the present embodiment, the current collector plate 26 is connected to the positive electrode leads 19, and the cap 25 functions as a positive electrode external terminal.

The current collector plate 26, which is a metal member with a diameter similar to that of the cap 25, is located closer to the side of the electrode assembly 10 than to the cap 25. The current collector plate 26 with an opening portion 26a in the radially center portion is formed in an annular shape. The cap 25 and the current collector plate 26 are welded, and the current collector plate 26 is welded at a position closer to an outer circumferential edge than to a radial center of the cap 25, for example. The current collector plate 26 has an annular projection 26b formed as described later, the projection 26b being a portion welded to the cap 25. As mentioned above, the current collector plate 26 is connected to the positive electrode leads 19 that are linked to the positive electrode of the electrode assembly 10. Therefore, the current collector plate 26 functions as a positive electrode current collector plate. Here, the cap may be directly welded to the positive electrode leads without providing the positive electrode current collector plate.

The gasket 33 is provided so as to surround an outer circumferential portion of a stacked body of the cap 25 and the current collector plate 26. The gasket 33 is an annular resin member or rubber member to prevent contact of the cap 25 and the current collector plate 26 with the outer can 20 and to ensure electrical insulation between the outer can 20 and sealing member 24. The gasket 33 covers the upper surface of the cap 25, the side surfaces of the cap 25 and the current collector plate 26, and the lower surface of the current collector plate 26 in the outer circumferential portion of the stacked body. The gasket 33 also fills a gap between the outer can 20 and the sealing member 24 to seal the inside of the battery 1.

The gasket 33 is formed to cover most of the lower surface of the current collector plate 26 and is interspersed between the current collector plate 26 and the upper insulating plate 34. In a radially center portion of the gasket 33, an opening portion 33a is formed so as to overlap with the opening portion 26a of the current collector plate 26 in the up-down direction. The gasket 33 may also have a through-hole 33b formed in an area located below the current collector plate 26. While the electrolyte solution is assumed to accumulate on the upper surface of the gasket 33, providing the through-hole 33b allows the electrolyte solution to return to the side of the electrode assembly 10. There may be a plurality of through-holes 33b along the circumferential direction of the gasket 33, for example. The gasket 33 further has an inner extension portion 33c that extends inward from the outer circumferential portion of the cap 25.

The upper end of the outer can 20 is bent inward to form a bent portion 210. The bent portion 210 can be used as a negative electrode external terminal.

### [Configuration of Bent Portion 210]

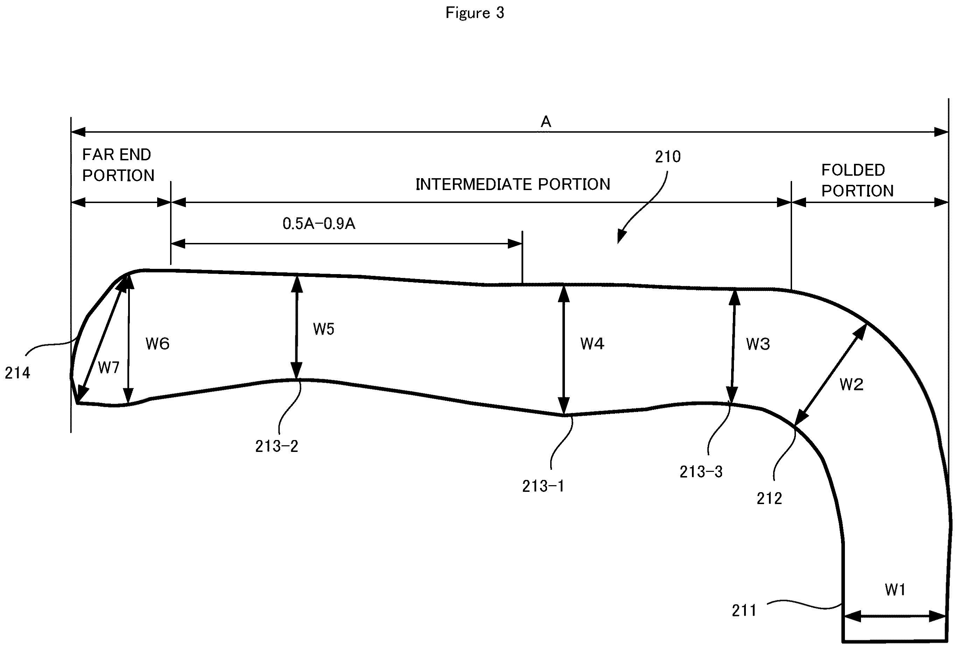

FIG. 3 is a longitudinal (radial) sectional view of an example of the bent portion 210 formed by bending the upper end of the outer can 20 inward. In this way, the bent portion 210 is configured by bending a portion 211 that extends in an axial direction (up-down direction) of the cylinder part 21 inward in the upper end portion. The bent portion 210 is formed by caulking as will be described later.

The bent portion 210 includes a folded portion 212 folded inward, an intermediate portion 213 extending inward from the folded portion 212, and a far end portion 214 that forms an inner far end. The far end portion 214 may be formed thicker than a thin-walled portion located outside the far end portion 214 in the radial direction of the outer can 20. The far end portion 214 may protrude toward the sealing member from the thin-walled portion in the height direction of the outer can. In addition, the folded portion 212 and the far end portion 214 may be thick-walled portions. The intermediate portion 213 has a thin-walled portion 213-2 on the side close to the far end portion 214, a thick-walled portion 213-1 in the vicinity of the center of the intermediate portion 213, and a thin-walled portion 213-3 on the side close to the folded portion 212.

The far end of the bent portion 210 on the side of the sealing member 24 extends to the more inner side to form an annular tapered slope. Such a shape allows the far end portion to be thicker, which makes it easy to suppress (crimp into) the inner extension portion 33c of the gasket 33.

Thus, the bent portion 210 has the thick far end portion 214 and the thin-walled portion 213-2 in the vicinity of the inside of the far end portion 214. By making the far end portion 214 thicker, the pressing force against the gasket below can be increased. This increase in pressing force increases the reaction force of the inner extension portion 33c of the gasket 33, which provides secure sealing of the inner extension portion 33c of the gasket 33 in the vicinity of the far end portion 214. On the other hand, since the thin-walled portion 213-2 is formed on the outside of the far end portion 214 in the radial direction, the reaction force of the gasket 33 can be maintained by accepting the thickness pressed by the far end portion 214. In addition, even when the radial dimension of the bent portion becomes longer, the upper surface of the bent portion 210 (the surface facing outward in the thickness direction of the bent portion) can be made flatter. Therefore, a sufficient welding area can be secured at the time of welding the negative electrode terminal or the like to the bent portion 210. Moreover, in the bent portion 210, the surface facing the gasket 33 in a region radially inside the thin-walled portion 213 has an inclined surface that becomes closer to the gasket toward the radially inside, and this region may be thicker toward the inside.

Here, as shown in the drawings, assuming that the thickness of the portion 211 corresponding to the upper part of the cylinder part 21 (the portion excluding the bent portion and positioned above the groove portion) is W1, the thickness of the folded portion 212 is W2, the thickness of the thin-walled portion 213-3 in front of the intermediate portion 213 is W3, the thickness of the thick-walled portion 213-1 in the intermediate portion is W4, the thickness of the thin-walled portion 213-2 on the far end side of the intermediate portion 213 is W5, and the thickness of the far end portion is W6, the bent portion 210 may satisfy the requirement of W5 < W6. The bent portion 210 may also satisfy the requirement of W5 < W4, W3 < W4, W3 < W2, or W1 < W2. In addition, since the far end portion 214 has a tapered slope, the far end portion may satisfy the requirement of W6 <W7 when the thickness thereof in the oblique direction is assumed to be W7. The bent portion 210 may also satisfy the requirement of W2 < W4.

When the dimension of a bending allowance of the bent portion 210 is defined as A as shown in FIG. 3, the far end portion 212 is located on the side from greater than or equal to 0.5A and less than or equal to A. Particularly, the region from 0.9A to A is defined as the far end portion. The thickness of the far end portion W6 or the thickness W7 may be increased by greater than or equal to 120% with respect to a minimum thickness W5 that is in the range of greater than or equal to 0.5A and less than or equal to 0.9A from the intermediate portion, especially, from the outer diameter of the outer can 20.

Moreover, in this example, the folded portion 212 is thicker than the vicinity thereof. Since the folded portion 212 is thicker, the mechanical strength in the folded portion 212 can be improved.

### [Caulking]

Here, the bent portion 210 varies in thickness in the radial direction. Such a thickness can be formed with a caulking device.

The motor is fixed on the caulking device, and its rotation shaft extends in the up-down direction. The main body is fixed to the lower end of the rotation shaft, and the main body rotates in a horizontal plane.

Around the lower end of the main body, a wheel is rotatably supported on the shaft extending in a horizontal direction. The cradle can move up and down, so that the caulking device moves up and down as a whole. Note that the shaft may extend in directions other than the horizontal direction.

The caulking device is positioned above the outer can 20, and when the motor is rotated, the main body rotates. When the caulking device is moved downward in this state, the wheel touches the upper end of the circumferential edge portion of the outer can 20. The wheel that functions as a caulking pressing tool is rotatable and moves while passively rotating over the upper end of the outer can 20. Then, as the caulking device further descends in this state, the upper end of the cylinder part 21 is gradually bent inward.

As the wheel gradually descends, the upper end of the cylinder part 21 is bent inward to form the bent portion 210, which is pressed against the sealing member 24 along with the gasket 33. The wheel has a notch formed on its outer circumferential surface, which is a contact surface with the cylinder part. The inner surface of the notch comes into line contact with the cylinder part. The inner surface of the notch has a first face facing the upper end of the cylinder part 21 in the height direction of the outer can, a second face facing the outer circumferential surface of the cylinder part in the radial direction, and an R portion that is a curved face at the corner where one end of the first face connects with one end of the second face. In this case, at the beginning of the caulking where the far end portion comes into contact with the notch of the wheel, the far end portion of the bent portion 210 thickens. When the far end portion is thickened, the R portion that comes into contact with the far end portion is indicated by an arc with a radius of less than or equal to 3 mm in the cross section obtained by cutting the wheel with a radial cutting line. The far end portion may be further indicated by an arc with a radius of less than or equal to 2.5 mm, and may be still further indicated by an arc with a radius of less than or equal to 2.0 mm. Then, at the end of caulking, the thick-walled portion 213-1 in the intermediate portion of the bent portion thickens.

### [Configuration of Sealing Member]

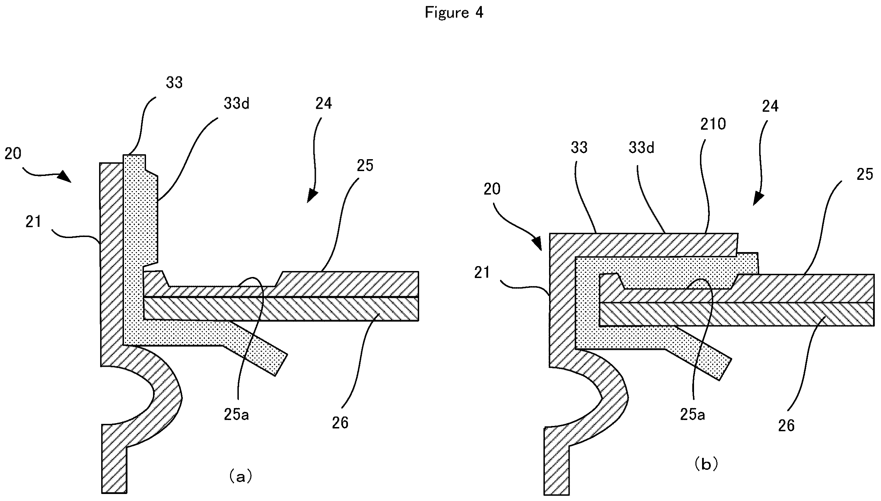

FIG. 4 is a partially enlarged view showing the configuration of the sealing member in the power storage device of the present embodiment, in which (a) shows before bending and (b) shows after bending.

In this way, the gasket 33 of the sealing member 24, which is made of resin, has a projection 33d in an intermediate portion that is slightly before the upper side. In the cap 25, which is a metal sealing assembly of the sealing member 24, a recessed portion 25a is formed at a circumferential edge portion of the cap 25 at the position corresponding to the projection 33d when the inner extension portion 33c is formed by bending the gasket 33. Note that in the power storage device in the present disclosure, a member that is arranged at an opening portion of an outer casing and covers at least part of the opening portion is defined as the sealing assembly. Therefore, the projection of the gasket may be fitted with a member other than the cap.

Therefore, the projection 33d of the gasket 33 fits into the recessed portion 25a of the cap 25 by bending an upper end portion of the cylinder part 21 of the outer can 20 by a caulking device. Accordingly, when the upper end of the cylinder part 21 of the outer can 20 is bent inward, and the bent portion 210 is pressed downward, the projection 33d of the gasket 33 that is pressed by the bent portion 210 fits into the recessed portion 25a, which restrains radially inward movement. Therefore, the reaction force of the gasket 33 acts on the lower surface of the bent portion 210 and reliably seals this area.

Here, in this example, the projection 33d has a downward tapered shape in cross section, and the recessed portion has a corresponding sectional shape. Such shapes make it easy for the projection 33d of the gasket 33 to fit into the recessed portion 25a at the time of bending. However, it is not necessary to provide such sectional shapes, and the projection 33d and recessed portion 25a in rectangular parallelepiped shapes may also be adopted.

In addition, by forming the projection 33d and the recessed portion 25a into an annular shape, sufficient stress of the gasket 33 can be obtained in the entire radial direction. However, instead of being formed into an annular shape, the projection 33d and the recessed portion 25a may be divided into a plurality of pieces in a circumferential direction as long as they can be aligned in the circumferential direction.

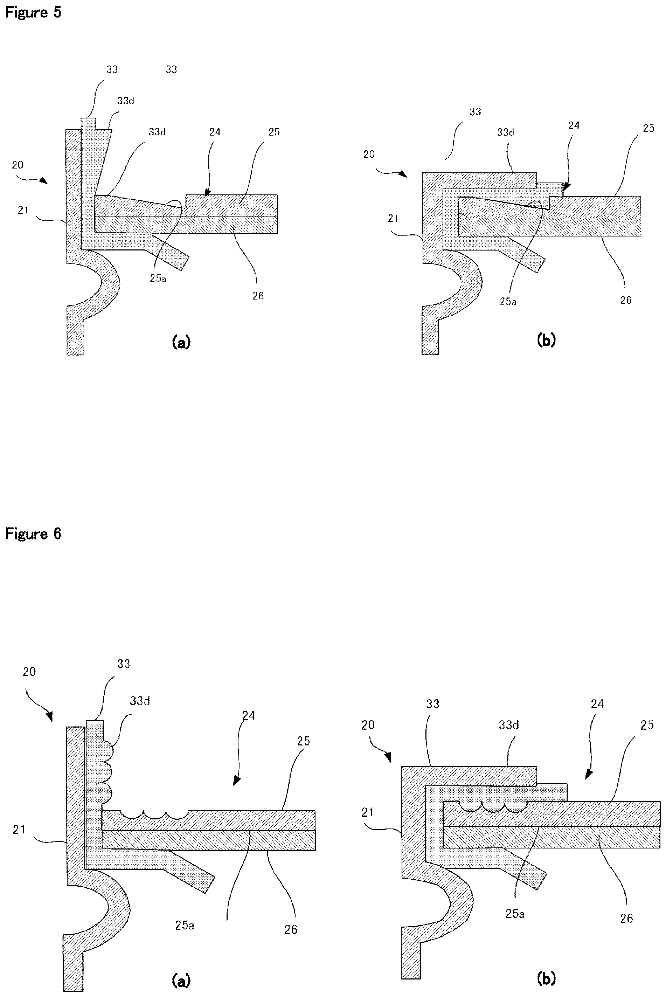

FIG. 5 is a partially enlarged view showing the configuration of the sealing member of the power storage device according to another embodiment, in which (a) shows before bending and (b) shows after bending. In this example, the shapes of the projection 33d and the recessed portion 25a are different from the example in FIG. 2. In this example, the projection 33d is shaped to be thicker toward the far end side of the gasket 33 (radially inside the bent portion 210). In other words, the cross section in the radial direction is in a right-angled triangle shape that increases the wall thickness toward the inside. In addition, the recessed portion 25a has a shape corresponding to the projection 33d.

In this example, as in the example described before, material flow toward the inside of the gasket can also be suppressed to achieve suitable sealing.

FIG. 6 is a partially enlarged view showing the configuration of the sealing member of the power storage device according to still another embodiment, in which (a) shows before bending and (b) shows after bending. In this example, the cross section of the recessed portion formed on a metal member side of the projection 33d is constituted of a plurality of semicircles. A plurality of hemispheres may protrude or annular protrusions may be formed. In this case, the bottom surface of the recessed portion 25a may have the shape of hemispheres or may be formed as semicircular grooves in cross section so as to be adapted to the projection 33d. Moreover, the recessed portion 25a may be an annular groove with a flat bottom surface similar to that in FIG. 2, and in that case, when the gasket is pressed downward with the bent portion 210, the bottom surface of the projection 33d expands so as to adapt to the shape of the recessed portion 25a.

In such a configuration, material flow toward the inside of the gasket 33 can also be suppressed to achieve suitable sealing.

Here, when the gasket 33 is bent along with the bent portion 210, the gasket 33 may be bent while being pressed radially inward by the wheel of the caulking device through the bent portion 210. When the inner extension portion 33c is formed by this pressing, the dimension of the sealing assembly from the outer circumferential edge may become longer than before the start of bending due to elastic deformation. By using the elastic deformation, the recessed portion 25a may be formed at the position distanced inward by a predetermined distance from the outer circumferential edge of the cap, and the projection 33d of the gasket 33 may be fitted into the recessed portion 25a while the gasket 33 is stretched radially inward. This configuration enhances the sealability of an interface between the recessed portion 25a and the projection 33d by the reaction force of the projection 33d acting outward in the radial direction. In this case, the reaction force is more easily obtained, particularly when the distance between the projection 33d before the gasket 33 is bent and the outer circumferential edge of the cap (in a protruding direction of the gasket) is less than the (radial) distance from the outer circumferential edge of the cap to the recessed portion 25a. In other words, the distance between the projection 33d before the gasket 33 is bent and the outer circumferential edge of the cap may be shorter in the state where the projection 33d does not fit in the recessed portion 25a than in the state where the projection 33d fits in the recessed portion 25a.

In the present embodiment, sealing is implemented when the projection 33d provided on the gasket 33 fits into the recessed portion 25a provided on the sealing assembly (cap 25) of the sealing member 24. Therefore, it is possible to prevent the material of the gasket 33 from flowing and escaping inward, so that sufficient reaction force of the gasket 33 is obtained and reliable sealing can be implemented.

### REFERENCE SIGNS LIST

1 Battery, 10 Electrode assembly, 11 Positive electrode, 12 Negative electrode, 13 Separator, 19 Positive electrode lead, 20 Outer can, 21 Cylinder part, 22 Bottom portion, 23 Groove portion, 24 Sealing member, 25 Cap, 25a Recessed portion, 26 Current collector plate, 26a Opening portion, 26b Projection, 33 Gasket, 33d Projection, 34 Upper insulating plate, 210 Bent portion, 211 Portion, 212 Folded portion, 213 Intermediate portion, 213-1 Thick-walled portion, 213-2 Thin-walled portion, 213-3 Thin-walled portion, 214 Far end portion.

## Claims

1. A power storage device, comprising:
an electrode assembly;
an outer can that houses the electrode assembly, the outer can having a cylinder part and an opening portion on one end side of the cylinder part; and
a sealing member that closes the opening, wherein
a bent portion that is folded inward is formed at a circumferential edge portion of the opening of the outer can,
the sealing member has a plate-shaped sealing assembly provided to close the opening and a gasket interposed between an upper surface of the sealing assembly and the bent portion,
a recessed portion is formed in part of the sealing assembly,
a projection is formed in part of the gasket, and
the projection of the gasket fits into the recessed portion of the sealing assembly.

2. The power storage device according to claim 1, wherein
both the recessed portion and the projection are annular.

3. The power storage device according to claim 1 or 2, wherein an inner far end of the gasket is positioned inside an inner far end of the bent portion.

4. The power storage device according to claim 1 or 2, wherein the gasket in which the projection is formed is made of resin, and the sealing assembly in which the recessed portion is formed is made of metal.

5. The power storage device according to claim 1, wherein
the recessed portion is arranged away from an outer circumferential edge of the sealing assembly, and
in the gasket having the projection detached from the recessed portion, a distance from the sealing assembly to the projection is less than a distance from an outer circumferential edge of the sealing plate to the recessed portion.
